# DEMANDE DE BREVET EUROPEEN

(11) **EP 4 636 591 A1**
(43) Date de publication de la demande: **22.10.2025**
(21) Numéro de dépôt: 24170284.4
(22) Date de dépôt: 15.04.2024
(51) Int. Cl.: G06F 9/48, G06F 9/50

(54) **PLATEFORME D'INTEROPÉRABILITÉ DE SYSTÈMES CONNECTÉS ET DE SERVICES NUMÉRIQUES AINSI QUE PROCÉDÉ DE CONFIGURATION DE LADITE PLATEFORME**

(71) Demandeur: Akenatech, 33600 Pessac (FR)
(72) Inventeur: WULSZTAT, Aurélien, 33700 MERIGNAC (FR)
(74) Mandataire: Ipside

(57) **Abrégé**

Plateforme d'interopérabilité (100,100a) pour ordonnancer et pour simuler des tâches de systèmes connectés (200) ainsi que de services numériques (300) dans le domaine militaire, ladite plateforme comportant un orchestrateur (10), un conteneur (11) de pilote informatique, une interface de communication interne (12), une interface de communication externe (13), une interface homme-machine (14), une base de données (15) connectée à l'orchestrateur (10), l'interface de communication interne (12) étant utilisée pour transférer de manière bidirectionnelle des ordres de tâches à réaliser entre l'orchestrateur (10) et le conteneur (11), l'interface de communication externe (13) étant utilisée pour transférer de manière bidirectionnelle des données entre le conteneur (11) et l'interface homme-machine (14) et/ou une application externe (44), l'orchestrateur (10) comportant un module administrateur (101) pour gérer les accès et les droits, un module de surveillance (102) des journaux d'évènements, un module d'ordonnancement (103), le module d'ordonnancement (103) comprenant une pluralité de librairies métiers (1031,1032,1033) ; le conteneur (11) comportant au moins un pilote informatique (112a-c,113a-c) pour communiquer des tâches et récupérer des données auprès d'un unique système connecté (200) ou d'un unique service numérique (300), le conteneur (11) comportant autant de pilote informatique que de système connecté (200) et de service numérique (300) à piloter ; la plateforme d'interopérabilité (100,100a) comprenant en outre un module de simulation (18) des systèmes connectés (200) et des services numériques (300) .

## Description

### DOMAINE TECHNIQUE

La présente invention appartient au domaine de l'automatisation de tâches interactives qui sont réalisées par des objets connectés, tel que des drones mais également des moyens de déplacement ou de recueil de données, pilotés ou non par des personnes.

L'invention concerne plus particulièrement une plateforme d'interopérabilité militaire de systèmes connectés et de services numériques permettant d'intégrer toutes sortes de systèmes et de protocole de communication, et qui est par ailleurs évolutives car n'étant pas dépendantes d'un matériel ou d'une technologie en particulier. En outre, l'invention concerne un moyen de simulation et d'aide à la décision en vue de notamment optimiser des missions militaires et permettre de choisir un scénario adéquate fonction des données terrains.

L'invention trouve une application directe dans le secteur militaire pour faciliter la coordination des drones aériens, terrestres, marins et sous-marins, mais également des effecteurs ainsi que l'ensemble des systèmes et unités qui sont mobilisés lors de missions et qui ne sont pas conçus à la base pour être coordonné ensemble.

### ÉTAT DE L'ART

Au cours des dernières années, une transformation significative et profonde grâce à l'émergence et à la démocratisation des objets connectés a été amorcée. Cette évolution a ouvert la voie à une nouvelle ère de possibilités technologiques et opérationnelles, mais elle a également soulevé un défi majeur : l'interopérabilité des systèmes connectés hétérogènes.

Quel que soit le secteur d'activité ou le métier, il existe un manque de compatibilité entre les différentes solutions connectées. Chacune de ces solutions dispose de son propre ensemble d'interfaces propriétaires au sein d'un environnement connecté global, ce qui entrave leur exploitation optimale.

En parallèle, les défis de sécurité et de défense évoluent constamment, la gestion efficace des systèmes d'armes hétérogènes ainsi que la coordination en temps réel des effecteurs sont devenues des impératifs stratégiques.

Les scénarios opérationnels modernes exigent une capacité à orchestrer de manière agile et précise des missions impliquant une diversité de plateformes, de capteurs et d'armements.

Les acteurs militaires et de sécurité sont alors confrontés à des besoins de coordination et de gestion intégrée sans précédent. Les systèmes d'armes hétérogènes, avec leurs différentes interfaces, protocoles de communication et capacités opérationnelles, nécessitent une approche unifiée et harmonisée pour assurer une efficacité maximale sur le terrain.

Le manque d'interopérabilité des ces solutions représente un frein significatif à l'évolution de performances des missions sur des théâtres d'opération.

On connaît le jumeau numérique, qui est un modèle virtuel d'un objet physique ou d'un système physique, et qui participe grandement à l'évolution technologique de l'armée du futur. Ce jumeau numérique reproduit le comportement du système physique dont il est une copie numérique, en partie ou entièrement. Il permet de simuler à différents instants, un ou des états du système physique, et ainsi anticiper certaines actions, notamment dans le cadre de mission. En revanche, une des difficultés est la possibilité de mettre en place une collaboration effective entre le système physique et son jumeau numérique. Notamment, il est difficile de faire évoluer le jumeau numérique en temps réel en fonction d'évènements qui interviennent sur le système physique, et de proposer des nouveaux scénarios en fonction des événements intervenus.

Il est donc impératif de poursuivre le développement de solutions qui garantiront une exploitation intelligente de l'ensemble des solutions connectées des différents acteurs du domaine, ainsi que leur intégration harmonieuse dans divers environnements techniques.

Actuellement, certaines normes et protocoles de communication visent à résoudre partiellement le problème de l'interopérabilité. Cependant, il reste encore beaucoup à faire pour parvenir à une interopérabilité complète et fluide. De plus, les tendances émergentes telles que l'intelligence artificielle, l'automatisation avancée et la sécurité des systèmes connectés ajoutent une couche de complexité à ce défi, tout en offrant de nouvelles opportunités pour résoudre ces problèmes de manière innovante.

La transformation numérique des armées est donc un enjeu majeur qui nécessite une réponse adéquate. Les armées doivent être en mesure de tirer pleinement parti des avantages que les systèmes connectés offrent en termes d'efficacité opérationnelle et des moyens d'actions.

De nouvelles solutions doivent donc émerger pour améliorer l'intégration des solutions connectées tout en favorisant une exploitation plus intelligente de ces nouvelles technologies et cela au sein des divers environnements militaires.

### PRÉSENTATION DE L'INVENTION

La présente invention vise à pallier tout ou partie des inconvénients présentés précédemment, et propose alors un orchestrateur universel et dynamique permettant l'interconnectivité et la simulation de systèmes et services numériques qui ne sont pas conçus nativement pour fonctionner ensemble, en intégrant aisément les protocoles de communications connus à ce jour. De plus, la présente invention a la capacité de s'adapter aux futurs protocoles et matériels qui seront développés dans le milieu militaire, au moyen d'applications qui sont virtualisées et qui sont implantées dans des systèmes embarqués.

À cet effet, la présente invention a pour objet une plateforme d'interopérabilité pour ordonnancer et pour simuler des tâches de systèmes connectés ainsi que de services numériques dans le domaine militaire, ladite plateforme comportant un orchestrateur, un conteneur de pilote informatique, une interface de communication interne, une interface de communication externe, une interface homme-machine, une base de données connectée à l'orchestrateur, l'interface de communication interne étant utilisée pour transférer de manière bidirectionnelle des ordres de tâches à réaliser entre l'orchestrateur et le conteneur, l'interface de communication externe étant utilisée pour transférer de manière bidirectionnelle des données entre le conteneur et l'interface homme-machine et/ou une application externe. La plateforme d'interopérabilité est remarquable en ce que l'orchestrateur comporte un module administrateur pour gérer les accès et les droits, un module de surveillance des journaux d'évènements, un module d'ordonnancement, le module d'ordonnancement comprenant une pluralité de librairies métiers; le conteneur comportant au moins un pilote informatique pour communiquer des tâches et récupérer des données auprès d'un unique système connecté ou d'un unique service numérique, le conteneur comportant autant de pilote informatique que de système connecté et de service numérique à piloter ; la plateforme d'interopérabilité comprenant en outre un module de simulation des systèmes connectés et des services numériques.

Selon une caractéristique, le module de simulation comporte en outre une boucle de rétroaction pour interagir avec l'orchestrateur.

Selon une caractéristique, la plateforme d'interopérabilité comporte en outre une interface opérateur de configuration de ladite plateforme.

Selon une caractéristique, l'interface opérateur de configuration virtualise les systèmes connectés et les services numériques au moyen de représentations virtuelles.

Selon une caractéristique, la plateforme d'interopérabilité comportant en outre une interface opérateur de pilotage de ladite plateforme.

Selon une caractéristique, l'interface opérateur de pilotage comporte des blocs d'objet/service pour interagir avec les systèmes connectés et les services numériques.

Selon une caractéristique, chaque blocs d'objet/service comporte une fenêtre de reprise manuelle.

Selon une caractéristique, la fenêtre de reprise manuelle comporte une liste une liste de tâches contenant des tâches configurées pour un élément, chacune desdites tâches comportant une fenêtre de paramétrage, la fenêtre de reprise manuelle comportant en sus un bouton d'arrêt d'urgence.

Selon une caractéristique, la plateforme d'interopérabilité est une plateforme d'interopérabilité mère dont un des pilotes informatiques du conteneur communique avec une interface de communication interne d'au moins une plateforme d'interopérabilité fille.

L'invention concerne également un procédé de configuration d'une plateforme d'interopérabilité présentant au moins une partie des caractéristiques précédentes, ledit procédé comporte les étapes suivantes :
- d'installation de la plateforme d'interopérabilité et des pilotes informatiques de ladite plateforme ;
- de découverte des pilotes informatiques par un orchestrateur de ladite plateforme ;
- de paramétrage des pilotes informatiques ;
- de configuration d'une représentation virtuelle d'une unité militaire pilotée par ladite plateforme, via une interface opérateur de configuration de ladite plateforme; et
- de surveillance de l'unité militaire.

L'invention concerne également un procédé de simulation de systèmes connectés et de services numériques pilotés par une plateforme d'interopérabilité présentant au moins une partie des caractéristiques précédentes, ledit procédé comportant les étapes suivantes :
- d'installation d'un module de simulation et d'une boucle de rétroaction de ladite plateforme ;
- de configuration des paramètres du module de simulation ;
- d'acquisition en temps réel de données provenant d'un orchestrateur de ladite plateforme ;
- d'analyse des données acquises et de simulations de scénarios d'amélioration ; et
- de proposition de solutions à partir des scénarios simulés précédemment.

L'invention concerne également un produit programme d'ordinateur comportant un ensemble d'instructions de code de programme qui, lorsqu'elles sont exécutées par un processeur, mettent en oeuvre un procédé de configuration d'une plateforme d'interopérabilité présentant au moins une partie des caractéristiques précédentes. L'invention concerne également un produit programme d'ordinateur comportant un ensemble d'instructions de code de programme qui, lorsqu'elles sont exécutées par un processeur, mettent en oeuvre un procédé de simulation de systèmes connectés et de services numériques présentant au moins une partie des caractéristiques précédentes.

Enfin, l'invention concerne également un dispositif informatique, mettant en oeuvre un procédé de configuration d'une plateforme d'interopérabilité et/ou procédé de simulation de systèmes connectés et de services numériques présentant au moins une partie des caractéristiques précédentes, ledit dispositif comprenant, une mémoire, un processeur de données, un moyen de transfert d'informations entrantes et sortantes.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : un schéma d'une architecture de systèmes connectés et de services numériques ordonnancés par une plateforme d'interopérabilité, selon un premier mode de réalisation de l'invention ;
- Figure 2 : un schéma représentant les principaux éléments d'un pilote informatique de la plateforme d'interopérabilité ;
- Figure 3 : un schéma représentant un fonctionnement dit en cascade de la plateforme d'interopérabilité ;
- Figure 4 : une vue de la fenêtre principale d'une interface opérateur pour configurer le pilote informatique ;
- Figure 5 : une vue de la fenêtre principale d'une interface opérateur pour piloter les systèmes connectés et les services numériques via la plateforme d'interopérabilité ;
- Figure 6 : un schéma sous forme de diagramme d'un procédé de configuration de la plateforme d'interopérabilité ;
- Figure 7 : un schéma sous forme de diagramme d'un procédé de simulation mis en oeuvre par la plateforme d'interopérabilité ;
- Figure 8 : un schéma sous forme de diagramme d'un dispositif informatique permettant la mise en oeuvre le procédé de configuration de la plateforme d'interopérabilité.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à une plateforme architecture de système et prenons comme exemple un cas d'usage militaire de l'interopérabilité d'objets connectés afin de coordonner des équipements militaires et unités militaires sur un théâtre d'opération, sans que cet exemple ne présente de limite à la présente l'invention.

De plus, l'invention permet d'évaluer la pertinence de manoeuvre opérées par des armées en simulant différents scénarios mis en oeuvre par les unités militaires modélisées numériquement au moyen de simulations et d'algorithmes dits « intelligents » qui sont entre autres basés sur des réseaux de neurones.

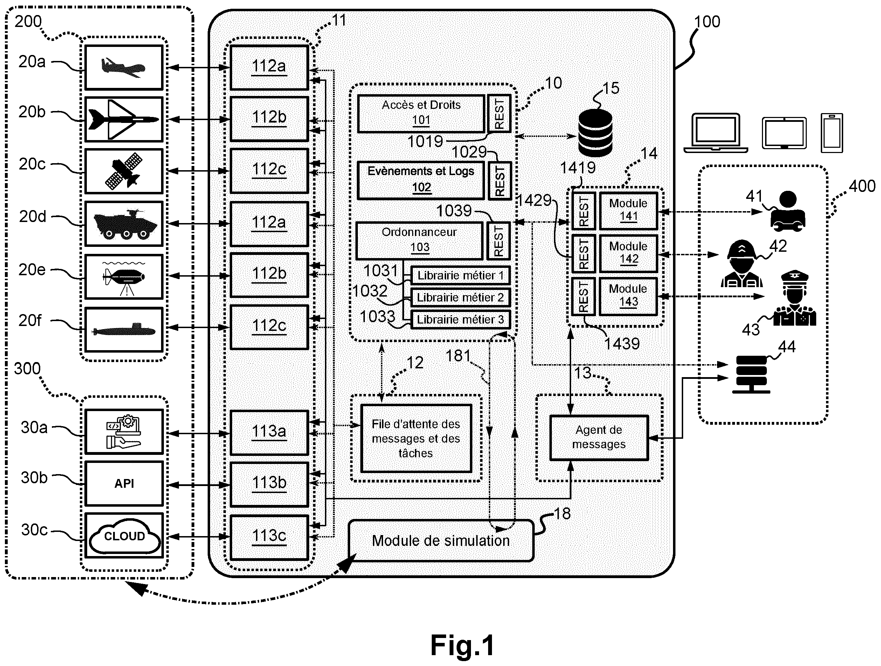

La Figure 1 représente un schéma d'une architecture de systèmes connectés 200 ainsi que de services numériques 300, lesdits systèmes et lesdits services étant pilotés et leurs tâches étant ordonnancés au moyen d'une plateforme d'interopérabilité 100.

Dans un mode préféré de l'invention, les systèmes connectés 200 sont des systèmes à usage militaire, comme par exemples des drones aériens 20a, des avions de chasse 20b, des satellites 20c, des véhicules terrestres 20d tel que des chars, des drones sous-marins 20e ainsi que des sous-marins 20f. D'autres systèmes connectés 200 peuvent être des caméras, mais également tous types de capteurs (température, humidité, pression, mouvement, intensité lumineuse, etc.) que l'homme du métier connait.

Dans le mode préféré de l'invention, les services numériques 300 sont des logiciels 30a, des interfaces de programmation d'application 30b (en anglais *Application*

*Programming Interface*, *API*), telles que décrites par une architecture RESTful, ainsi que tout autre application web 30c donnant accès à des données qui sont utilisées par la plateforme d'interopérabilité 100 pour piloter et coordonner les unités militaires.

Les interfaces de programmation d'application 30b sont des API permettant, par exemple, d'obtenir des informations sur les conditions météorologiques d'un lieu ou d'un site, sur la géolocalisation d'un système via un service de géo-positionnement par satellite.

La plateforme d'interopérabilité 100 comporte quant à elle et principalement un orchestrateur 10, un conteneur 11 de pilotes informatiques, une interface de communication interne 12, une interface de communication externe 13, une interface homme-machine 14 ainsi qu'une base de données 15.

L'orchestrateur 10 possèdent l'ensemble des fonctionnalités pour que les autres éléments de la plateforme d'interopérabilité 10 échangent des données, et cela malgré les différences ce protocole.

Ainsi l'orchestrateur 10 comporte un module administrateur 101, un module de surveillance 102 des journaux d'évènements ainsi qu'un module d'ordonnancement 103.

Le module administrateur 101 est notamment utilisé pour gérer les accès ainsi que les droits pour d'utilisateurs externes 400.

Dans le mode préféré de l'invention, l'accès à la plateforme d'interopérabilité 100 par les utilisateurs externes 400 est effectué au moyen d'une authentification d'accès unique et d'une autorisation selon des droits spécifiques assignés en fonction des rôles desdits utilisateurs. Avantageusement, les données, systèmes connectés 200 ainsi que services numériques 300 sont sécurisés en mettant en place une distinction forte entre les différents utilisateurs externes 400 de la plateforme d'interopérabilité 100.

A titre d'exemple, les utilisateurs externes 400 peuvent être des constructeurs 41, des soldats 42, des officiers supérieurs 43 ainsi que des applications tierces 44. De façon avantageuse, les applications tierces 44 peuvent être, sans que cela ne soit une limite :
- un progiciel de génération de stratégie d'actions ordonnant des actions ;
- un progiciel de traitement d'évènements enregistrant les stratégies adverses ;
- un progiciel qui est utilisé pour contrôler et surveiller l'état des équipements.

Le module d'ordonnancement 103 comprend quant à lui une pluralité de librairies métiers 1031-1033 qui sont spécifiques aux corps d'armées.

Dans le mode de réalisation préféré de l'invention, le format d'échange de données s'appuie sur un modèle de communication connu par l'homme du métier et qui standardise au sein de la plateforme d'interopérabilité 100 les échanges entre l'interface de communication interne 12 et le conteneur 11 de pilotes informatiques, et qui permet d'utiliser notamment un agent de messages entre l'interface de communication externe 13 et les utilisateurs externes 400.

Ce choix technique est notamment optimisé pour les architectures distribuées, et cela pour l'exécution de différentes tâches telles que la découverte de services, le déploiement, ainsi les évolutions futures.

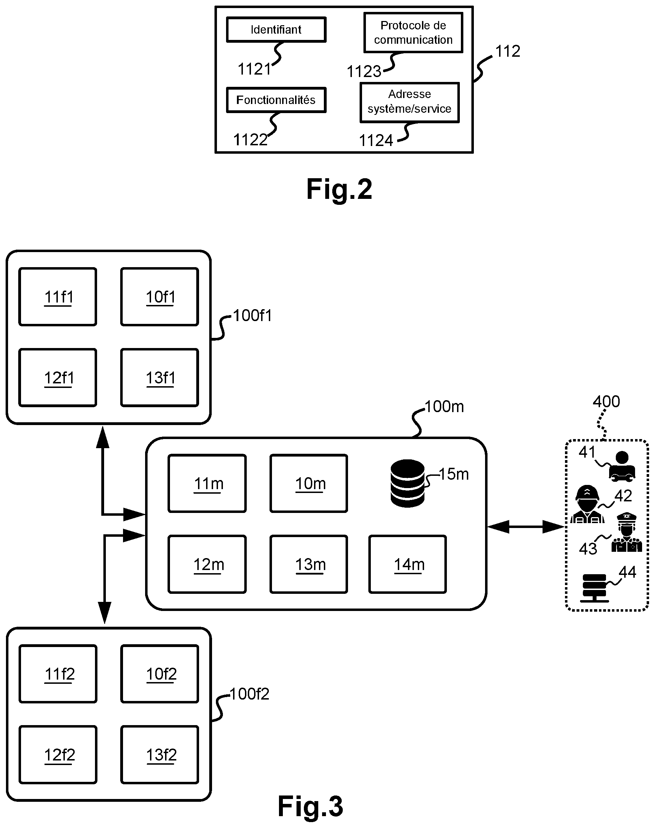

Le conteneur 11 de pilotes informatiques comporte au moins un pilote informatique 112a-c et 113a-c, ledit pilote étant connecté soit à un système connecté 200, soit à un service numérique 300. Le conteneur 11 est décrit plus en détail à la Figure 2.

L'interface de communication interne 12 est notamment utilisée pour structurer la coordination des systèmes connectés 200 ainsi que les tâches qui sont générées par l'orchestrateur 10, et cela suivant la logique métier des systèmes connectés 200 et des services numériques 300.

Cette structuration est mise en oeuvre au moyen de queues de messages de haute performance qui vont assurer la communication des tâches aux systèmes connectés 200 ainsi qu'aux services numériques 300.

Ainsi, l'ensemble des tâches à réaliser sont stockées dans une queue d'actions et un système d'appels permet de les traiter en appliquant la logique définie par l'ordonnancement. Ces appels sont disponibles aux différentes étapes du déploiement d'une unité militaire. Ils sont exécutés avant (prise en compte de la condition prédéfinie) ou après chaque tâche (succès ou erreur) et permettent de déterminer quand une nouvelle tâche doit être traitée.

Avantageusement, lorsqu'une tâche devient disponible, l'interface de communication interne 12 l'attribue soit à un seul système connecté 200 soit à un ensemble de systèmes connectés 200 qui sont similaires.

D'autres types de queues sont également gérées par l'interface de communication interne 12, telles que des queues d'alarmes et des queues de résultat d'exécution des tâches.

Cet ensemble de queues assure une bonne transmission des informations au sein de la plateforme d'interopérabilité 100, et donc la bonne exécution des tâches par les systèmes connectés 200.

Avantageusement, la plateforme d'interopérabilité 100 permet aussi de réaliser une tâche particulière, dans un mode dit « *de reprise manuelle* » par un utilisateur externe 400, et via l'interface homme-machine 14. Au moyen du mode de reprise manuelle, l'utilisateur externe 400 reprend le contrôle, en partie ou en totalité, sur le système connecté 200, et cela sans impacter les autres tâches automatisées qui sont en cours d'exécution. Ainsi, les tâches réalisées manuellement cohabitent parfaitement, et sans conséquences négatives, avec les tâches programmées dans la plateforme d'interopérabilité 100, l'ensemble des systèmes connectés 200 à ladite plateforme étant informés en temps réel de l'état et des tâches des autres systèmes connectés 200 avec lesquels ils interagissent.

A titre d'exemple, l'utilisateur externe 400 reprenant le contrôle manuel d'un drone, les tâches que ledit utilisateur affectera audit drone passeront alors en priorité dans la queue d'actions par rapport à des tâches programmées automatiquement. Ce mode de reprise manuelle est particulièrement intéressant pour des plateformes d'interopérabilité 100 qui comportent des robots mobiles autonomes (en anglais *Autonomous Mobile Robots*, *AMR*) et des véhicules à guidage automatique (en anglais Automatic Guided Vehicle, AGV) appliqués à l'industrie.

Notamment cela est le cas dans le contexte militaire pour la gestion en temps réel, ou la simulation de scénarios, de plusieurs effecteurs mais aussi pour les systèmes de combat aérien du futur (SCAF) qui nécessitent alors un haut niveau de coordination.

L'interface de communication externe 13 quant à lui assure l'ensemble des communications avec l'extérieur de l'instance concernée. Comme évoqué précédemment, la communication entre les pilotes informatiques 112a-c et 113a-c, l'interface de communication externe 13 et l'interface homme-machine 14 ainsi que les utilisateurs externes 400 est effectué au moyen d'agents de messages.

Cette méthodologie de communication standardisée est alors utilisée pour permettre la remontée d'informations entre le conteneur 11 de pilotes informatiques et l'interface homme-machine 14 ou vers d'autres applications tierces 44.

Aussi, cette méthodologie permet de s'assurer que les actions demandées via l'interface homme-machine 14 sont bien prises en compte et de connaitre le statut de leurs exécutions.

L'interface homme-machine 14 intègre différentes fonctionnalités avancées de datavisualisation pour faciliter la supervision de l'état d'avancement des tâches qui sont réalisées par les systèmes connectés 200.

Préférablement, l'interface homme-machine 14 échange des données avec l'orchestrateur 10 au moyen d'APis 1019-1039 et 1419-1439 et selon une architecture RESTful.

Dans le mode de réalisation préféré de l'invention, l'interface homme-machine 14 comporte des modules 141-143 tels que des modules de cartographie (bibliothèque Javascript Leaflet, OpenStreetmap, etc.), des modules de graphes (bibliothèque JavaScript Chart.js), des modules de tableaux de bord personnalisables, des modules de téléopération pour piloter à distance des AMR, des AGV, des drones, et des modules vidéo pour lire les flux provenant de caméra.

De par sa modularité, ainsi que par sa capacité à s'adapter et prendre en compte les différents protocoles de communications entre matériels, la plateforme d'interopérabilité 100 est donc un outil qui s'intègre parfaitement sur un théâtre d'opération militaire.

Chaque plateforme d'interopérabilité 100 peut donc s'adapter à l'ensemble de l'environnement technologique d'un contexte militaire et être considérée comme un ordonnanceur universel et dynamique pouvant prendre en compte les évolutions futurs desdits environnements. La plateforme d'interopérabilités 100 ne dépend pas de marques de matériels ni de protocoles propriétaires.

Avantageusement, et dans l'exemple pris pour illustrer un cas d'application de l'invention, les différentes tâches des systèmes connectés 200 étant programmées au préalable, il est également possible de simuler, par exemple, la manoeuvre d'une unité militaire en temps réel afin de comparer les données simulées avec celles obtenues par les remontées d'informations. En effet, les unités militaires ont pour ainsi dire un jumeau numérique qui est une copie virtuelle de l'ensemble des systèmes connectés et de leurs modes de fonctionnement.

A titre d'exemple, lorsqu'une dérive est observée entre les simulations et données réelles des unités militaires, une notification peut être émise afin d'alerter l'officier supérieur 43 qui déclenchera une action de résolution si besoin.

De plus, la plateforme d'interopérabilité 100 permet avantageusement d'importer une configuration simulée préalablement et cela directement dans l'environnement de production.

Dans un autre exemple, la plateforme d'interopérabilité 100 est en capacité d'alerter des utilisateurs externes 400 de l'état des systèmes connectés 200 qui ne seraient pas ceux attendus pour une mission définie, et donc de permettre auxdits utilisateurs de modifier les tâches à venir desdits systèmes.

Enfin, une surcouche d'algorithmes, basés entre autres sur des réseaux de neurones sans que cela ne soit limitatif à la présente invention, sont utilisés afin d'effectuer des recommandations pour optimiser notamment les interventions sur des théâtres d'opérations, et à la suite d'une période d'apprentissage, et pour affiner les simulations de manoeuvre.

La plateforme d'interopérabilité 100 comprend en outre un module de simulation 18 des systèmes connectés 200 ainsi que des services numériques 300, et de leurs tâches respectives. Le module de simulation 18 comprend des représentations virtuelles de chacun des systèmes connectés 200 et des services numériques 300 utilisés dans une unité militaire.

Ainsi, le module de simulation 18 reproduit virtuellement et notamment le comportement et les fonctions des systèmes connectés 200, aussi bien en mode nominal de fonctionnement, que les défaillances potentielles, erreurs et alarmes. Le module de simulation 18 fonctionne en parallèle de l'orchestrateur 10.

De plus, le module de simulation 18 comporte une boucle de rétroaction 181 afin de transmettre de nouvelles consignes à l'orchestrateur 10 pour notamment optimiser les performances des systèmes connectés 200 de l'unité militaire.

A titre d'exemple, lorsque le module de simulation 18 identifie des événements tels que des pertes de rendements, des défaillances sur l'un des systèmes connectés 200, ou des erreurs humaines, ledit module est en mesure de proposer, via la boucle de rétroaction 181, des ajustements en temps réel des tâches qui sont exécutées par les systèmes connectés, mais aussi de réorganiser lesdites tâches. Ces ajustements sont mis en oeuvre de façon automatique par l'orchestrateur 10, ou après validation de l'officier supérieur 43. De plus, les impacts de ces ajustements sont évalués par le module de simulation 18, ce qui permet à l'officier supérieur 43 d'avoir une vision à moyen terme de l'efficacité de la mission en cours de l'unité militaire qui a été reconfigurée.

En amont de la surveillance en temps réel de l'unité militaire, le module de simulation 18 est également apte à simuler différents scénarios pour, par exemple, anticiper des pertes ainsi que les problèmes techniques ou évaluer l'impact de l'ajout et/ou le retrait de systèmes connectés 200 sur l'efficacité de l'unité militaire. L'analyse en temps réel ainsi que l'anticipation des problèmes potentiels par le module de simulation 18, contribuent à améliorer l'efficacité, la pertinence ainsi que la fiabilité des missions de l'unité militaire.

Ainsi, la présente invention constitue un outil d'aide à la décision performant pour les armées, notamment par la capacité du module de simulation 18 à générer des scénarios pour aider les militaires à prendre des décisions.

La Figure 2 représente un schéma des principaux éléments d'un pilote informatique 112 du conteneur 11 de la plateforme d'interopérabilité 100.

Pour rappel, le pilote informatique 112 est connecté uniquement à un système connecté 200 ou un service numérique 300. Autrement dit, dans une mission piloté par la plateforme d'interopérabilité 100, il y a un pilote informatique 112 pour chaque système connecté 200 et pour chaque service numérique 300 utilisés.

Dans un mode de réalisation particulier, un des éléments des systèmes connectés 200 est relié à une pluralité de pilotes informatiques, chacun desdits pilotes étant dédié à une tâche particulière tel que le contrôle du plan de vol ou la gestion des caméras du drone 20a par exemple.

Chaque pilote informatique 112 comporte donc un identifiant unique 1121 ainsi que l'adresse 1124 du système connecté 200 ou du service numérique 300 auquel ledit pilote est associé.

Un protocole de communication 1123 propre au système connecté 200 et au service numérique 300 est implémenté dans le pilote informatique 112.

Le pilote informatique 112 comporte également un ensemble de fonctionnalités génériques 1122, a donc la capacité de réaliser une ou plusieurs tâches et a un rôle de file d'attente de tâches.

Chaque pilote informatique 112 est également apte à effectuer un prétraitement des données localement avant de les transmettre à l'orchestrateur 10, si ce prétraitement est programmé dans ledit pilote. Dans d'autres modes de réalisation, le traitement des données est réalisé au niveau de l'orchestrateur 10. Le choix de réaliser le traitement des données au niveau du pilote informatique 112 ou de l'orchestrateur 10 est en fonction des besoins spécifiques de chaque vecteur et de la situation opérationnelle.

Avantageusement, et dans le cas le système connecté 200 ou le service numérique 300 n'est pas encore géré par la plateforme d'interopérabilité 100, le pilote informatique 112 peut être développé via un kit de développement logiciel, plus communément appelé le SDK (acronyme anglais de Software Development Kit) qui est intégré à ladite plateforme.

La Figure 3 représente un schéma d'un fonctionnement dit « en cascade » de l'invention selon un autre mode de réalisation.

Avantageusement, une plateforme d'interopérabilité 100f1-f2, dite « fille » peut être considérée comme un service numérique 300, qu'il est possible de faire communiquer avec une seconde plateforme d'interopérabilité 100m, dite « mère ». La plateforme d'interopérabilité fille 100f1-f2 a donc une relation hiérarchique avec la plateforme d'interopérabilité mère 100m.

Dans cet exemple, deux plateformes d'interopérabilité filles 100f1-f2 sont connectées à la plateforme d'interopérabilité mère 100m, sans que cela ne soit une limite à la présente invention. Par ailleurs, une plateforme d'interopérabilité fille 100f1-f2, peut à son tour être une plateforme d'interopérabilité mère dans ce fonctionnement dit « en cascade ».

Cette aptitude à connecter plusieurs plateformes d'interopérabilité 100f1-f2 et 100m entre elles est particulièrement adapté aux cas d'usage où les unités militaires sont localisées sur plusieurs zones distantes. La surveillance globale et la coordination de ces différentes unités militaires est quant à elle possible via la plateforme d'interopérabilité 100m.

Avantageusement, cette interconnectivité de plusieurs plateformes d'interopérabilité 100f1-f2 et 100m permet de gérer des systèmes militaires complexes.

L'interconnectivité est conçue pour répondre de manière flexible et adaptable aux exigences d'une chaine de commandement ainsi qu'aux différents niveaux de décision dans les opérations militaires et de sécurité.

De plus, cette interconnectivité s'ajuste aux besoins spécifiques des missions en répartissant les plateformes d'interopérabilités fille 100f1-f2 en cascade, alignées avec les niveaux de délégation d'exécution dans la chaine de commandement. Cette approche en cascade permet une distribution efficace des responsabilités, chaque plateforme fille 1 00fa-f2 étant dépendante de celle qui la gouverne, assurant ainsi une coordination fluide et une prise de décision adaptative.

Par ailleurs, cette architecture est apte à accompagner les armées lorsque celles-ci ont des projets de réorganisations de leurs unités militaires, et répond efficacement au verrou d'adaptabilité et de scalabilité.

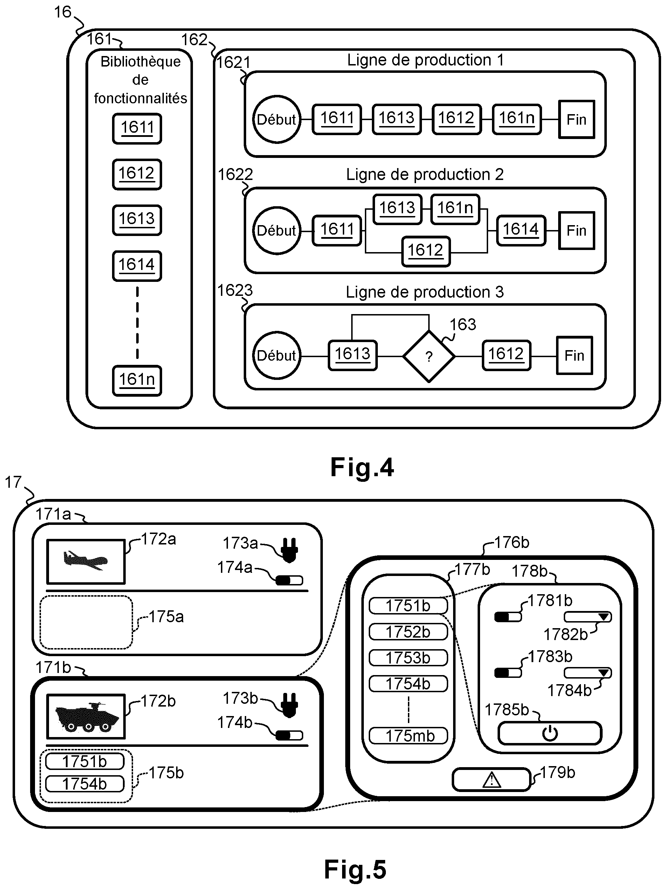

La Figure 4 représente une vue de la fenêtre principale d'une interface opérateur de configuration 16 utilisée pour configurer des unités militaires qui sont orchestrées par la plateforme d'interopérabilité 100.

L'interface opérateur de configuration 16 comporte principalement une bibliothèque de fonctionnalités 161 et une zone de configuration 162 des unités militaires.

La bibliothèque de fonctionnalités 161 comporte une pluralité de fonctionnalités telles que le déplacement d'un effecteur ou d'un engin suivant leurs modes, le déplacement d'un véhicule vers de nouveaux coordonnées géographiques.

La zone de configuration 162 comporte au moins une représentation virtuelle 1621-1623 d'au moins une unité militaire. Dans l'exemple représenté à la Figure 4, la zone de configuration 162 comporte trois représentations virtuelle 1621-1623 d'unité militaire, chacune desdites unités comprenant un début et une fin.

L'orchestration d'une unité militaire est alors réalisée en positionnant dans sa représentation virtuelle correspondante, les fonctionnalités 1611-161n sous forme de diagramme, les unes par rapports aux autres. L'enchaînement des fonctionnalités 1611-161n va définir des tâches.

Des séquences sont alors programmées, et les fonctionnalités 1611-161n peuvent :
- être exécutées les unes après les autres, comme cela est visible sur la représentation virtuelle 1621 ;
- être en partie exécutées en parallèle, comme cela est visible sur la représentation virtuelle 1622 ;
- être pour certaines exécutées en fonction de conditions (par exemple boucles de répétition, délai d'attente avant une autre tâche, nombre de tentative), comme cela est visible sur la représentation virtuelle 1623.

Par ailleurs, les séquences d'exécution de tâches peuvent être déclenchées au moyen d'évènements. Chaque fonctionnalité 1611-161n est définie par des paramètres généraux, mais également des paramètres qui lui sont propres. Avantageusement, chacune des fonctionnalités 1611-161n est donc paramétrable indépendamment ce qui permet de répondre à l'ensemble des besoins, présents et futurs, qui sont rencontrés sur un site où est implémenté la plateforme d'interopérabilité 100. Un environnement technique est alors représenté par sa propre représentation virtuelle 1621-1623.

Avantageusement, une fonctionnalité 1611-161n peut être assignée à un système connecté 200 ou sinon à un système connecté 200 qui n'a pas de tâche en cours. La plateforme d'interopérabilité 100 est apte à distribuer les tâches programmées selon des critères prédéfinis tels que la disponibilité d'un système connecté 200, l'aptitude d'un système connecté 200 à réaliser une tâche.

Ainsi, la plateforme d'interopérabilité 100 permet une gestion intelligente et une optimisation des ressources disponibles des unités militaires.

La figure 5 est une vue de la fenêtre principale d'une interface opérateur de pilotage 17 pour piloter les systèmes connectés 200 et les services numériques 300 via la plateforme d'interopérabilité 100.

L'interface opérateur de pilotage 17 comporte au moins un bloc d'objet/service connecté 171a-b, chaque bloc d'objet/service connecté 171a-b faisant référence à des éléments 172a-b des systèmes connectés 200, ici et pour l'exemple, qui sont respectivement un drone aérien et un char. Pour faciliter la compréhension, uniquement deux éléments 172a et 172b sont représentés sur l'interface opérateur de pilotage 17 dans cet exemple. Dans d'autres modes de réalisation, un nombre N d'éléments peuvent être affichés dans l'interface opérateur de pilotage 17. Chaque bloc d'objet/service comporte un indicateur de fonctionnement 173a-b informant l'utilisateur extérieur 400 si le système connecté 200 ou le service numérique 300 est activé. L'utilisateur extérieur 400 peut indépendamment activer ou mettre en pause les éléments 172a et 172b du système connecté 200 ou du service numérique 300 au moyen d'un bouton 174a-b correspondant. Chaque bloc d'objet/service 171a-b comporte également une zone d'affichage des tâches en attente 175a-b. Dans l'exemple représenté à la figure 5, l'élément 172a ne comporte pas de tâches en attente, et l'éléments 172b comporte deux tâches 1751b et 1754b en attente.

Ainsi, l'utilisateur externe 400 est en capacité de superviser en temps réel l'état des éléments 172a ou 172b d'une unité militaire qui aura été préalablement configurée via l'interface opérateur de configuration 16 décrite précédemment et représentée à la figure 4.

Comme expliqué précédemment, la plateforme d'interopérabilité 100 présente notamment comme avantage à l'utilisateur externe 400 de piloter les systèmes connectés 200, au moyen du mode de reprise manuelle. Ce mode de reprise manuelle est accessible via l'interface opérateur de pilotage 17, en sélectionnant l'élément 172a ou 172b, via un écran tactile ou un pointeur/curseur. Dans cet exemple, le mode de reprise manuelle est illustré pour l'élément 172b. Une fois le bloc d'objet/service 171b sélectionné, une fenêtre de reprise manuelle 176b s'affiche. La fenêtre de reprise manuelle 176b comporte une liste de tâches 177b qui contient les tâches 1751b-175mb qui sont programmées pour l'élément 172b. Pour chacune des tâches 1751b-175mb, une fenêtre de paramétrage 178b s'affichent lorsqu'une des tâches 1751b-175mb est sélectionnée (par écran tactile ou pointeur/curseur). Comme expliqué précédemment, chacune des tâches 1751b-175mb comportent un paramétrage qui lui est propre et ce paramétrage est entièrement configurable via la fenêtre de paramétrage 178b. Ainsi, la fenêtre de paramétrage 178b comporte au moins un paramètre accessible, par exemple, via des menus déroulants 1782b et 1784b, paramètre qui peut être activé ou désactivé au moyen d'un commutateur 1781b ou 1783b.

Chaque tâche 1751b-175mb dispose également d'un bouton marche/arrêt 1785b dans la fenêtre de paramétrage 178b.

Enfin, un bouton d'arrêt d'urgence 179b permet d'interrompre le fonctionnement de l'élément 172b. Chaque élément 172a-b dispose de son propre bouton d'arrêt d'urgence 179b.

De façon générale, et avantageusement, l'interface opérateur de pilotage 17 permet à un utilisateur externe 400 d'interagir en temps réel avec les systèmes connectés 200 et les services numériques 300, pour effectuer différentes actions telles que relancer des tâches, supprimer des tâches, changer la priorité d'exécution de certaines tâches, mettre en pause, ajouter des délais.

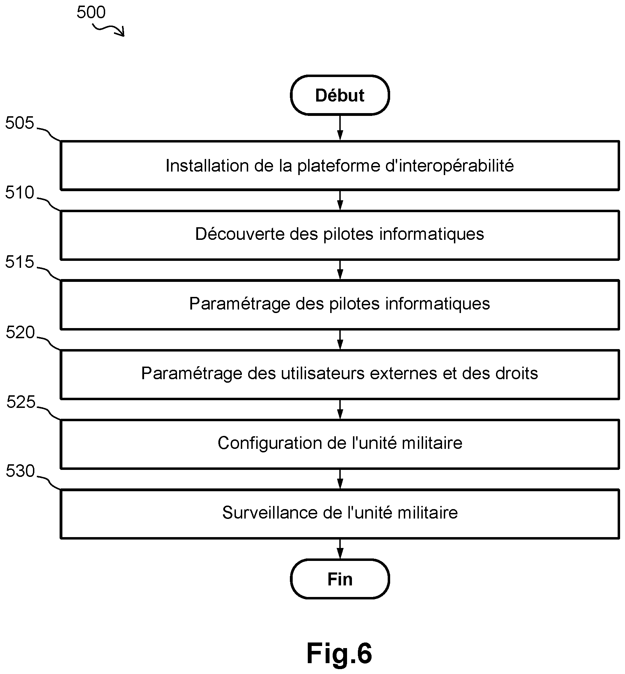

La figure 6 représente un diagramme d'un procédé de configuration 500 de la plateforme d'interopérabilité 100, selon un mode de réalisation de l'invention.

Le procédé de configuration 500 comprend principalement :
- une étape 505 d'installation de la plateforme d'interopérabilité 100 et des pilotes informatiques 112a-c et 113a-c ;
- une étape 510 de découverte des pilotes informatiques 112a-c et 113a-c par l'orchestrateur 10 ;
- une étape 515 de paramétrage des pilotes informatiques 112a-c et 113a-c ;
- une étape 520 de paramétrage des utilisateurs externes 400 et des droits ;
- une étape 525 de configuration de la représentation virtuelle 1621-1623 de l'unité militaire ; et
- une étape 530 de surveillance de l'unité militaire.

L'étape 505 d'installation de la plateforme d'interopérabilité 100 et des pilotes informatiques 112a-c et 113a-c consiste à déployer des conteneurs virtualisés pour installer ladite plateforme ainsi que lesdits pilotes. L'étape 505 d'installation de la plateforme d'interopérabilité 100 et des pilotes informatiques 112a-c et 113a-c garantit un déploiement efficace et flexible de la plateforme d'interopérabilité 100, notamment en assurant une installation cohérente et reproductible, qui simplifie à la fois la montée en charge et les mises à jour.

Durant l'étape 510 de découverte des pilotes informatiques 112a-c et 113a-c par l'orchestrateur 10, via le réseau filaire ou sans fil utilisé par l'unité militaire, ledit orchestrateur effectue une découverte automatique des pilotes informatiques 112a-c et 113a-c installé précédemment, en identifiant lesdits modules et leurs fonctionnalités. L'étape 510 de découverte des pilotes informatiques 112a-c et 113a-c s'exécute automatiquement et en boucle tout au long de l'utilisation de la plateforme d'interopérabilité 100 pour mettre à jour si besoin les informations concernant les systèmes connectés 200 et les services numériques 300 qui sont utilisés.

Durant l'étape 515 de paramétrage des pilotes informatiques 112a-c et 113a-c, les pilotes informatiques 112a-c et 113a-c sont paramétrés en fonction des besoins spécifiques de l'unité militaire. Pour chaque pilote informatique 112a-c et 113a-c, les utilisateurs externes 400 modifient le numéro d'identification unique attribué au moyen militaire du système connecté 200. Ce paramétrage permet une configuration flexible et adaptée à l'environnement du théâtre d'opération.

L'étape 520 de paramétrage des utilisateurs externes 400 et des droits est réalisée via le module administrateur 101. Les droits et rôles de chaque utilisateur externe 400 sont spécifiés, chaque rôle étant associé à des autorisations précises qui déterminent des actions que lesdits utilisateurs peuvent effectuer. Par exemple, certains utilisateurs externes 400 peuvent être autorisés à agir uniquement sur certaines étapes de la manoeuvre/mission, ou sur certains systèmes connectés 200 et/ou services numériques 300, autrement dit, sur certains pilotes informatiques 112a-c et/ou 113a-c.

L'étape 525 de configuration de la représentation virtuelle 1621-1623 de l'unité militaire consiste à associer les différentes phases de la mission avec les fonctionnalités 1611-161n qui ont été obtenues lors de l'étape 510 de découverte des pilotes informatiques 112a-c et 113a-c, lesdites fonctionnalités étant paramétrées nativement dans lesdits pilotes. Lors de l'étape 525 de configuration de la représentation virtuelle 1621-1623 de l'unité militaire, les fonctionnalités 1611-161n sont agencées en fonction des besoins, et comme cela est présenté à la figure 4. Notamment, certaines fonctionnalités 1611-161n sont configurées pour être exécutées séquencement, en parallèle, ou répétées selon un nombre défini d'itérations souhaitées, comme le montre la figure 4. Des paramètres tels que le nombre de tentatives en cas d'échec et/ou erreur d'exécution, le délai entre l'enchaînement de tâches consécutives définies par les fonctionnalités 1611-161n sont également configurés durant l'étape 525 de configuration de la représentation virtuelle 1621-1623 de l'unité militaire. Une fois l'unité militaire configurée, la mission peut être exécutée.

Durant l'étape 530 de surveillance de l'unité militaire, les utilisateurs externes 400 interagissent avec la plateforme d'interopérabilité 100 via l'interface opérateur de pilotage 17 pour visualiser les opérations en cours, obtenir des statistiques des actions en cours pour analyser l'efficacité de la mission en cours, ladite interface étant représentée à la figure 5.

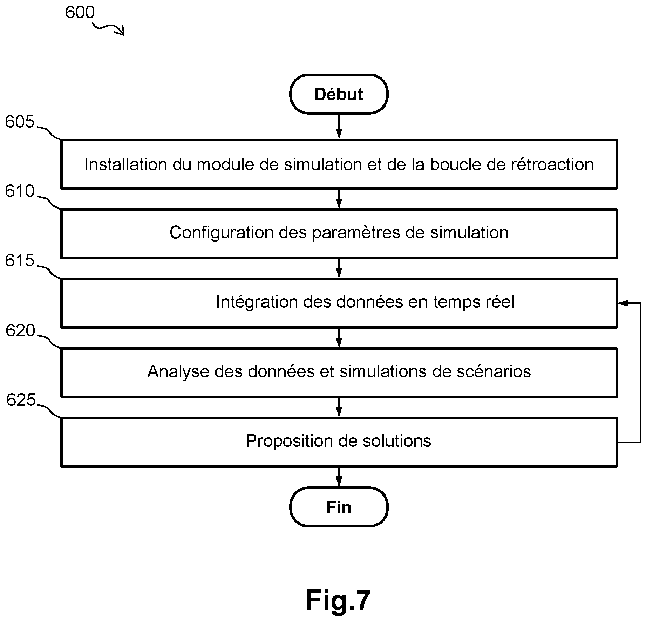

La figure 7 représente un diagramme d'un procédé de simulation 600 mis en oeuvre par la plateforme d'interopérabilité 100, selon un mode réalisation de l'invention. Le procédé de simulation 600 comprend principalement :
- une étape 605 d'installation du module de simulation 18 et de la boucle de rétroaction 181 ;
- une étape 610 de configuration des paramètres du module de simulation 18 ;
- une étape 615 d'acquisition en temps réel des données provenant de l'orchestrateur 10 ;
- une étape 620 d'analyse des données et de simulations de scénarios d'amélioration ;
- une étape 625 de proposition de solutions à partir des scénarios simulés. L'étape 605 d'installation du module de simulation 18 et de la boucle de rétroaction 181 est réalisée en parallèle de l'étape 505 d'installation de la plateforme d'interopérabilité 100 et des pilotes informatiques 112a-c et 113a-c, décrite précédemment. Le module de simulation 18 est conçu pour fonctionner de manière asynchrone avec l'orchestrateur 10, permettant ainsi une simulation et une analyse continues des opérations militaires.

L'étape 610 de configuration des paramètres du module de simulation 18 est ensuite réalisée, et consiste à configurer et modéliser chaque fonctionnalités 1611-161n ainsi que les interactions entre les différentes phases de l'opération militaire. Les paramètres du module de simulation 18 qui sont configurés sont par exemple la pertinence des actions, la capacité de mouvements, le temps de traitement, le temps de mission, le taux de défaillance et la capacité des systèmes connectés 200. Cette configuration est réalisée automatiquement par analyse statistique pour correspondre aux conditions réelles de fonctionnement des systèmes connectés 200.

Le module de simulation 18 est configuré pour, lors de l'étape 615 d'acquisition en temps réel des données provenant de l'orchestrateur 10, collecter les informations nécessaires sur l'état de l'opération militaire, y compris les performances des systèmes connectés 200 et les incidents éventuels. Les données collectées sont ensuite utilisées pour alimenter le module de simulation 18 et représenter numériquement et précisément l'état de l'opération militaire.

L'étape 620 d'analyse des données et de simulations de scénarios d'amélioration est exécutée quant à elle en parallèle de l'opération militaire réelle. Le module de simulation 18 analyse en temps réel les données collectées et identifie les écarts par rapport aux performances attendues. Par exemple, le module de simulation 18 détecte qu'un des systèmes connectés 200 est en retard dans l'exécution d'une tâche, ou qu'une défaillance est apparue. Sur la base de cette analyse, le module de simulation 18 génère des scénarios pour optimiser l'opération militaire et proposer des solutions aux utilisateurs externes 400. Ces scénarios sont générés au moyen de différentes approches telles que par l'utilisation d'algorithmes basés entre autres sur des réseaux de neurones, ou par des calculs de probabilités. L'étape 625 de proposition de solutions à partir des scénarios simulés est ensuite exécutée, les propositions étant présentées sous forme de recommandations aux utilisateurs externes 400, via notamment l'interface opérateur de pilotage 17 par exemple. Les solutions proposées sont basées sur une évaluation complète des états des systèmes connectés 200, au moyen des données réelles qui sont collectées, mais aussi à partir des simulations réalisées par le module de simulation 18. Ainsi, les utilisateurs externes 400 sont en capacité de prendre des décisions éclairées pour optimiser les opérations militaires telles que des recommandations pour repositionner les équipements, réorganiser des déploiements d'unités militaires. Une fois que les solutions proposées sont mises en oeuvre, de nouvelles données des états des systèmes connectés 200 sont obtenues et une nouvelle analyse des données collectées et de nouvelles simulations de scénarios sont réalisées. Sur la figure 7, ce mécanisme est représenté au moyen d'une flèche allant de l'étape 625 de proposition de solutions à l'étape d'acquisition en temps réel des données provenant de l'orchestrateur 10.

Dans un mode de réalisation particulier, les solutions sont mises en oeuvre directement par l'orchestrateur 10 au moyen de la boucle de rétroaction 181, sans l'intervention des utilisateurs externes 400.

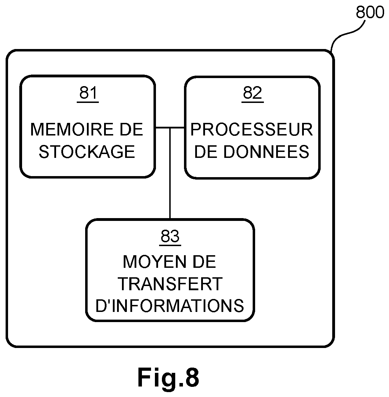

La figure 8 représente un schéma fonctionnel d'un dispositif informatique 800 pour la mise en oeuvre d'un ou plusieurs modes de réalisation de l'invention.

Le dispositif informatique 800 peut être un dispositif tel qu'un serveur, ou une unité de calcul.

Dans un mode de réalisation particulier, le dispositif informatique 800 comprend une mémoire 81, pour le stockage d'instructions de programme ainsi que de données, un processeur 82 de données aptes à exécuter au moins une étape du procédé de configuration 500, et un moyen de transfert d'informations 83 entrantes et sortantes, tel qu'une interface réseau câblées ou sans fil.

Ce mode de réalisation particulier est donné à titre d'exemple, et ne représente pas une limite à la présente invention. En effet, pour mettre en oeuvre le procédé de configuration 500, l'homme du métier est en capacité d'utiliser des dispositifs informatiques présentant des fonctionnalités toutes ou en partie identiques à celles décrites précédemment.

Avantageusement, la plateforme d'interopérabilité 100 permet de s'adapter aux futurs protocoles de communication informatique qui seront développés, sans avoir à modifier son architecture globale. Aussi, la plateforme d'interopérabilité 100 est en capacité d'intégrer les futurs équipements que ce soit des drones (aériens, terrestre, marin, sous-marin), des robots ou des capteurs par exemple, car l'aspect matériel ne présente pas non plus une limite à ladite plateforme.

La plateforme d'interopérabilité 100 est une avancée significative dans le domaine de la gestion intégrée de missions, offrant une approche dynamique et polyvalente pour répondre aux défis modernes de la sécurité et de la défense.

Il s'agit alors d'un avantage par rapport aux solutions de l'art antérieur qui sont dépendantes par rapport aux technologies et protocoles connus.

## Revendications

1. Plateforme d'interopérabilité (100,100a) pour ordonnancer et pour simuler des tâches de systèmes connectés (200) ainsi que de services numériques (300) dans le domaine militaire, ladite plateforme comportant un orchestrateur (10), un conteneur (11) de pilote informatique, une interface de communication interne (12), une interface de communication externe (13), une interface homme-machine (14), une base de données (15) connectée à l'orchestrateur (10), l'interface de communication interne (12) étant utilisée pour transférer de manière bidirectionnelle des ordres de tâches à réaliser entre l'orchestrateur (10) et le conteneur (11), l'interface de communication externe (13) étant utilisée pour transférer de manière bidirectionnelle des données entre le conteneur (11) et l'interface homme-machine (14) et/ou une application externe (44), ladite plateforme étant **caractérisée en ce que** l'orchestrateur (10) comporte un module administrateur (101) pour gérer les accès et les droits, un module de surveillance (102) des journaux d'évènements, un module d'ordonnancement (103), le module d'ordonnancement (103) comprenant une pluralité de librairies métiers (1031,1032,1033) ; le conteneur (11) comportant au moins un pilote informatique (112a-c,113a-c) pour communiquer des tâches et récupérer des données auprès d'un unique système connecté (200) ou d'un unique service numérique (300), le conteneur (11) comportant autant de pilote informatique que de système connecté (200) et de service numérique (300) à piloter ; la plateforme d'interopérabilité (100,100a) comprenant en outre un module de simulation (18) des systèmes connectés (200) et des services numériques (300) .

2. Plateforme d'interopérabilité (100) selon la revendication 1, le module de simulation (18) comportant en outre une boucle de rétroaction (181) pour interagir avec l'orchestrateur (10).

3. Plateforme d'interopérabilité (100) selon l'une quelconque des revendications précédentes, comportant en outre une interface opérateur de configuration (16) de ladite plateforme.

4. Plateforme d'interopérabilité (100) selon la revendication 3, l'interface opérateur de configuration (16) virtualise les systèmes connectés (200) et les services numériques (300) au moyen de représentation virtuelles (1621-1623).

5. Plateforme d'interopérabilité (100) selon l'une quelconque des revendications précédentes, comportant en outre une interface opérateur de pilotage (17) de ladite plateforme.

6. Plateforme d'interopérabilité (100) selon la revendication 5, l'interface opérateur de pilotage (17) comportant des blocs d'objet/service (171a,171b) pour interagir avec les systèmes connectés 200 et les services numériques 300.

7. Plateforme d'interopérabilité (100) selon la revendication 5, chaque blocs d'objet/service (171a,171b) comportant une fenêtre de reprise manuelle (176b).

8. Plateforme d'interopérabilité (100) selon la revendication 7, la fenêtre de reprise manuelle (176b) comportant une liste une liste de tâches (177b) contenant des tâches (1751b-175mb) configurées pour un élément (172a,172b), chacune desdites tâches (1751b-175mb) comportant une fenêtre de paramétrage (178b), la fenêtre de reprise manuelle (176b) comportant en sus un bouton d'arrêt d'urgence (179b).

9. Plateforme d'interopérabilité (100) selon l'une quelconque des revendications précédentes, dans laquelle ladite plateforme est une plateforme d'interopérabilité mère (100m) dont un des pilotes informatiques (112m) du conteneur (11m) communique avec une interface de communication interne (12f1,12f2) d'au moins une plateforme d'interopérabilité fille (100f1,100f2).

10. Procédé (500) de configuration d'une plateforme d'interopérabilité (100,100a) selon l'une des revendications 1 à 9, **caractérisé en ce que** ledit procédé comporte les étapes suivantes :
- (505) d'installation de la plateforme d'interopérabilité (100, 100a) et des pilotes informatiques (112a-c, 113a-c) de ladite plateforme ;
- (510) de découverte des pilotes informatiques (112a-c, 113a-c) par un orchestrateur (10) de ladite plateforme ;
- (515) de paramétrage des pilotes informatiques (112a-c, 113a-c) ;
- (525) de configuration d'une représentation virtuelle (1621-1623) d'une unité militaire pilotée par ladite plateforme, via une interface opérateur de configuration (16) de ladite plateforme; et
- (530) de surveillance de l'unité militaire.

11. Procédé (600) de simulation de systèmes connectés (200) et de services numériques (300) pilotés par une plateforme d'interopérabilité (100,100a) selon l'une des revendications 1 à 9, **caractérisé en ce que** ledit procédé comporte les étapes suivantes :
- (605) d'installation d'un module de simulation (18) et d'une boucle de rétroaction (181) de ladite plateforme ;
- (610) de configuration des paramètres du module de simulation (18) ;
- (615) d'acquisition en temps réel de données provenant d'un orchestrateur (10) de ladite plateforme ;
- (620) d'analyse des données acquises et de simulations de scénarios d'amélioration ; et
- (625) de proposition de solutions à partir des scénarios simulés précédemment.

12. Produit programme d'ordinateur **caractérisé en ce qu'**il comporte un ensemble d'instructions de code de programme qui, lorsqu'elles sont exécutées par un processeur, mettent en oeuvre un procédé (500) de configuration d'une plateforme d'interopérabilité (100,100a) selon la revendication 10.

13. Produit programme d'ordinateur **caractérisé en ce qu'**il comporte un ensemble d'instructions de code de programme qui, lorsqu'elles sont exécutées par un processeur, mettent en oeuvre un procédé (600) de simulation de systèmes connectés (200) et de services numériques (300) selon la revendication 11.

14. Dispositif informatique (800), mettant en oeuvre un procédé (500) de configuration d'une plateforme d'interopérabilité (100,100a) et/ou procédé (600) de simulation de systèmes connectés (200) et de services numériques (300) selon l'une des revendications 12 à 13, **caractérisé en ce que** ledit dispositif comprend, une mémoire (81), un processeur (82) de données, un moyen de transfert d'informations (83) entrantes et sortantes.
